# EUROPÄISCHE PATENTANMELDUNG

(11) **EP 3 093 452 A1**
(43) Veröffentlichungstag der Anmeldung: **16.11.2016**
(21) Anmeldenummer: 15167166.6
(22) Anmeldetag: 11.05.2015
(51) Int. Cl.: F01D 13/00, F01D 15/10, H02K 51/00, H02K 16/02, H02K 7/18, F01D 5/04

(54) **TURBOMASCHINENSTRANG UND VERFAHREN ZUM BETREIBEN EINES TURBOMASCHINENSTRANGS**

(71) Anmelder: Siemens Aktiengesellschaft, 80333 München (DE)
(72) Erfinder: Heidelberg, Henrik, 40476 Düsseldorf (DE); Rothe, Klaus, 46459 Rees (DE); Walkenhorst, Jan, 45478 Mülheim an der Ruhr (DE)

(57) **Zusammenfassung**

Die Erfindung betrifft einen Turbomaschinenstrang mit einem einen Stator (9) aufweisenden Generator (6), einem ersten Teilstrang (2), der sich ausgehend von dem Generator (6) in die eine Axialrichtung des Turbomaschinenstrangs (1, 12) erstreckt und der eine erste Strömungsmaschine (4) sowie einen radial innerhalb des Stators (9) angeordneten Innenläufer (7) aufweist, und einem zweiten Teilstrang (3), der sich ausgehend von dem Generator (6) in die andere Axialrichtung des Turbomaschinenstrangs (1, 12) erstreckt und eine zweite Strömungsmaschine (5) sowie einen radial außerhalb des Stators (9) angeordneten Außenläufer (8) aufweist, wobei der Innenläufer (7) eine Innenerregerwicklung zum Erzeugen eines Innenmagnetfelds und der Außenläufer (8) eine Außenerregerwicklung zum Erzeugen eines Außenmagnetfelds aufweist, so dass durch Einschalten des jeweiligen Magnetfelds jeder der Teilstränge (2, 3) mit dem Generator (6) einzeln kuppelbar und durch Ausschalten des jeweiligen Magnetfelds jeder der Teilstränge (2, 3) von dem Generator (6) einzeln entkuppelbar ist.

## Beschreibung

Die Erfindung betrifft einen Turbomaschinenstrang und ein Verfahren zum Betreiben des Turbomaschinenstrangs.

Herkömmlich wird eine Mehrzahl an Strömungsmaschinen an einem einzelnen Strang, d.h. auf einer einzelnen Welle, angeordnet. Dies ist beispielsweise bei einem Dampfkraftwerk der Fall, wenn eine Mehrzahl an Dampfturbinen einen Generator antreibt. Im Teillastbetrieb des Dampfkraftwerks ist es erforderlich jede der Dampfturbinen mit einem Dampfmassenstrom zu durchströmen, um eine Überhitzung der Dampfturbine aufgrund von Reibung zu unterbinden. Dieser Dampfmassenstrom verursacht jedoch eine Verminderung des Wirkungsgrades des Dampfkraftwerks. Alternativ ist es bekannt eine Kupplung vorzusehen, so dass die Möglichkeit besteht, mindestens eine der Dampfturbinen von dem Strang zu entkuppeln. Diese Kupplung kann beispielsweise eine Synchronkupplung sein. Das Vorsehen der Kupplung ist jedoch konstruktiv aufwändig. Weiterhin können mit der Synchronkupplung lediglich Strömungsmaschinen miteinander gekuppelt werden, die mit der gleichen Drehzahl rotieren und den gleichen Drehsinn haben.

Ein weiteres Beispiel für die Anordnung mehrerer Strömungsmaschinen an einem einzelnen Strang ist eine Dampfturbine, die einen Verdichter zum Verdichten eines Prozessgases antreibt. Hierbei ist es erforderlich, dass der die Dampfturbine durchströmende Dampfmassenstrom an die Leistung des Verdichters angepasst ist. Ist der zu Verfügung stehende Dampfmassenstrom höher als für den Betrieb des Verdichters erforderlich ist, so muss der Dampfmassenstrom anderweitig verwendet werden oder mit zusätzlichem Wasser abgekühlt werden, was den Wirkungsgrad vermindert.

Objektive technische Aufgabe ist es, eine Alternative zu einer Synchronkupplung zu schaffen.

Ein erfindungsgemäßer Turbomaschinenstrang weist einen einen Stator aufweisenden Generator, einen ersten Teilstrang, der sich ausgehend von dem Generator in die eine Axialrichtung des Turbomaschinenstrangs erstreckt und der eine erste Strömungsmaschine sowie einen radial innerhalb des Stators angeordneten Innenläufer aufweist, und einen zweiten Teilstrang auf, der sich ausgehend von dem Generator in die andere Axialrichtung des Turbomaschinenstrangs erstreckt und eine zweite Strömungsmaschine sowie einen radial außerhalb des Stators angeordneten Außenläufer aufweist, wobei der Innenläufer eine Innenerregerwicklung zum Erzeugen eines Innenmagnetfelds und der Außenläufer eine Außenerregerwicklung zum Erzeugen eines Außenmagnetfelds aufweist, so dass durch Einschalten des jeweiligen Magnetfelds jeder der Teilstränge mit dem Stator einzeln kuppelbar und durch Ausschalten des jeweiligen Magnetfelds jeder der Teilstränge von dem Stator einzeln entkuppelbar ist.

Ein alternativer erfindungsgemäßer Turbomaschinenstrang weist einen einen Stator aufweisenden Generator, einen ersten Teilstrang, der sich ausgehend von dem Generator in die eine Axialrichtung des Turbomaschinenstrangs erstreckt und der einen ersten Strömungsmaschinenrotor sowie einen radial innerhalb des Stators angeordneten Innenläufer aufweist, und einen zweiten Teilstrang auf, der sich ausgehend von dem Generator in die eine Axialrichtung des Turbomaschinenstrangs erstreckt und einen zweiten Strömungsmaschinenrotor sowie einen radial außerhalb des Stators angeordneten Außenläufer aufweist, wobei der Innenläufer eine Innenerregerwicklung zum Erzeugen eines Innenmagnetfelds und der Außenläufer eine Außenerregerwicklung zum Erzeugen eines Außenmagnetfelds aufweist, so dass durch Einschalten des jeweiligen Magnetfelds jeder der Teilstränge mit dem Stator einzeln kuppelbar und durch Ausschalten des jeweiligen Magnetfelds jeder der Teilstränge von dem Stator einzeln entkuppelbar ist.

Ein erfindungsgemäßes Verfahren zum Betreiben eines Turbomaschinenstrangs mit einem einen Stator aufweisenden Generator, einem ersten Teilstrang, der sich ausgehend von dem Generator in die eine Axialrichtung des Turbomaschinenstrangs erstreckt und der eine erste Strömungsmaschine sowie einen radial innerhalb des Stators angeordneten Innenläufer aufweist, und einem zweiten Teilstrang, der sich ausgehend von dem Generator in die andere Axialrichtung des Turbomaschinenstrangs erstreckt und eine zweite Strömungsmaschine sowie einen radial außerhalb des Stators angeordneten Außenläufer aufweist, wobei der Innenläufer eine Innenerregerwicklung zum Erzeugen eines Innenmagnetfelds und der Außenläufer eine Außenerregerwicklung zum Erzeugen eines Außenmagnetfelds aufweist, so dass durch Einschalten des jeweiligen Magnetfelds jeder der Teilstränge mit dem Stator einzeln kuppelbar und durch Ausschalten des jeweiligen Magnetfelds jeder der Teilstränge von dem Stator einzeln entkuppelbar ist, weist den Schritt auf: Kuppeln von mindestens einem der beiden Teilstränge mit dem Stator durch Einschalten desjenigen Magnetfeldes, das zu dem mindestens einen Teilstrang gehört.

Ein alternatives erfindungsgemäßes Verfahren zum Betreiben eines Turbomaschinenstrangs mit einem einen Stator aufweisenden Generator, einem ersten Teilstrang, der sich ausgehend von dem Generator in die eine Axialrichtung des Turbomaschinenstrangs erstreckt und der einen ersten Strömungsmaschinenrotor sowie einen radial innerhalb des Stators angeordneten Innenläufer aufweist, und einem zweiten Teilstrang, der sich ausgehend von dem Generator in die andere Axialrichtung des Turbomaschinenstrangs erstreckt und einen zweiten Strömungsmaschinenrotor sowie einen radial außerhalb des Stators angeordneten Außenläufer aufweist, wobei der Innenläufer eine Innenerregerwicklung zum Erzeugen eines Innenmagnetfelds und der Außenläufer eine Außenerregerwicklung zum Erzeugen eines Außenmagnetfelds aufweist, so dass durch Einschalten des jeweiligen Magnetfelds jeder der Teilstränge mit dem Stator einzeln kuppelbar und durch Ausschalten des jeweiligen Magnetfelds jeder der Teilstränge von dem Stator einzeln entkuppelbar ist, weist den Schritt auf: Kuppeln von mindestens einem der beiden Teilstränge mit dem Stator durch Einschalten desjenigen Magnetfeldes, das zu dem mindestens einen Teilstrang gehört.

Die beiden Teilstränge sind nicht mechanisch miteinander gekuppelt, sondern sind durch Einschalten des jeweiligen Magnetfeldes mit dem Generator kuppelbar. Wenn sowohl das Innenmagnetfeld als auch das Außenmagnetfeld eingeschaltet sind, sind die beiden Teilstränge auch miteinander gekuppelt. In dem erfindungsgemäßen Turbomaschinenstrang und mit dem erfindungsgemäßen Verfahren wird der Generator sowohl als Generator als auch als Kupplung eingesetzt. Damit ist es möglich zwei Strömungsmaschinen miteinander lösbar zu kuppeln ohne dass es erforderlich ist, eine zusätzliche Kupplung, wie beispielsweise eine Synchronkupplung, vorzusehen, wodurch der Turbomaschinenstrang vorteilhaft konstruktiv einfach ist. Zudem wird zum Kuppeln jedes Teilstrangs lediglich das jeweilige Magnetfeld eingeschaltet, indem die jeweilige Erregerwicklung von einem Strom durchflossen wird. Analog dazu wird jeder Teilstrang entkuppelt, indem die jeweilige Erregerwicklung stromlos geschaltet wird. Dies stellt vorteilhaft ein einfaches und schnelles Verfahren zum Kuppeln und Entkuppeln dar.

Bevorzugt sind beide Strömungsmaschinen Dampfturbinen. Für den Fall, dass nicht genügend Dampf zur Verfügung steht, um beide Dampfturbinen anzutreiben, kann vorteilhaft eine der beiden Dampfturbinen von dem Turbomaschinenstrang entkuppelt werden. Die entkuppelte Dampfturbine kann sich beispielsweise im Stillstand befinden, wodurch sie vorteilhaft nicht von Dampf durchströmt werden braucht, um ein Aufheizen durch Reibung zu unterbinden. Dadurch, dass die entkuppelte Dampfturbine nicht von Dampf durchströmt wird, sind Verluste von Energie vorteilhaft gering. Alternativ kann die entkuppelte Dampfturbine in einem Turnbetrieb betrieben werden, bei dem die Dampfturbine während ihres Abkühlens langsam gedreht wird, um ein Durchbiegen des zu der entkuppelten Dampfturbine gehörenden Teilstrangs zu unterbinden.

Es ist bevorzugt, dass eine der beiden Strömungsmaschinen eine Dampfturbine und die andere der beiden Strömungsmaschinen ein Verdichter ist. Hier ist es vorteilhaft möglich in Zeiten, in denen der Verdichter nicht benötigt wird, die Leistung der Dampfturbine zum Erzeugen von elektrischem Strom zu verwenden. Ist der zu Verfügung stehende Dampfmassenstrom höher als für den Betrieb des Verdichters erforderlich ist, so kann vorteilhaft die Dampfturbine mit einer höheren Leistung betrieben werden als der Verdichter benötigt. Die überschüssige Leistung kann via den Generator in ein Stromnetz eingespeist werden.

Es ist bevorzugt, dass erste Strömungsmaschinenrotor eine erste Turbinenhälfte einer Ljungström-Turbine und der zweite Strömungsmaschinenrotor die zweite Turbinenhälfte der Ljungström-Turbine ist oder wobei der erste Strömungsmaschinenrotor ein Innenrotor einer Doppelrotorenströmungsmaschine und der zweite Strömungsmaschinenrotor ein Außenrotor der Doppelrotorenströmungsmaschine ist. Durch das Vorsehen des Außenläufers und des Innenläufers ist es vorteilhaft möglich die Ljungström-Turbine statt wie herkömmlich mit zwei Generatoren mit lediglich einem Generator zu betreiben. Auch ist es vorteilhaft möglich die Doppelrotorenströmungsmaschine mit lediglich einem Generator zu betreiben. Der Außenrotor und der Innenrotor können einen gleichen Drehsinn oder einen gegenläufigen Drehsinn haben. Auch können der Außenrotor und der Innenrotor mit verschiedenen Drehzahlen betrieben werden.

Es ist bevorzugt, dass der Stator eine Statorwicklung elektrischer Leiter aufweist, die an ein Stromnetz elektrisch angeschlossen ist. Dadurch kann der Generator zusätzlich zu dem Kuppeln der beiden Teilstränge auch elektrischen Strom erzeugen.

In einer Ausführungsform ist eine der beiden Strömungsmaschinen eine Dampfturbine und die andere der beiden Strömungsmaschinen eine Pumpe. In einer weiteren Ausführungsform ist eine der beiden Strömungsmaschinen eine Gasturbine und die andere der beiden Strömungsmaschinen eine Pumpe. In einer weiteren Ausführungsform ist eine der beiden Strömungsmaschinen eine Gasturbine und die andere der beiden Strömungsmaschinen ein Verdichter. In einer weiteren Ausführungsform ist eine der beiden Strömungsmaschinen eine Gasturbine und die andere der beiden Strömungsmaschinen eine Dampfturbine. In einer weiteren Ausführungsform ist eine der beiden Strömungsmaschinen ein Verdichter und die andere der beiden Strömungsmaschinen ein Verdichter. In einer weiteren Ausführungsform ist eine der beiden Strömungsmaschinen eine Pumpe und die andere der beiden Strömungsmaschinen eine Pumpe.

Mindestens einer der beiden Läufer ist bevorzugt ein Läufer einer Asynchronmaschine. Dadurch ist es vorteilhaft möglich Teilstränge miteinander zu kuppeln, die eine unterschiedliche Drehzahl haben.

Es ist bevorzugt, dass der Maschinenstrang Teil eines Dampfkraftwerks ist, das einen Flüssigkeits-/Dampfkreislauf aufweist, die beiden Strömungsmaschinen Dampfturbinen sind und das Verfahren den Schritt aufweist: Durchströmen beider Dampfturbinen mit Dampf, wenn der Dampfmassenstrom in dem Flüssigkeits-/Dampfkreislauf über einem Schwellenwert liegt; Durchströmen lediglich einer der beiden Dampfturbinen mit Dampf, wenn der Dampfmassenstrom unter dem Schwellenwert liegt. Bevorzugt weist das Verfahren den Schritt auf: In dem Fall, dass lediglich die eine Dampfturbine durchströmt wird, Ausschalten desjenigen Magnetfeldes, das zu dem Teilstrang gehört, der die andere Dampfturbine aufweist. Indem in einem Teillastbetrieb eine der Dampfturbinen entkuppelt wird und nicht von Dampf durchströmt wird, ist der Wirkungsgrad des Dampfkraftwerks vorteilhaft hoch. Es ist bevorzugt, dass dem Flüssigkeits-/Dampfkreislauf für eine variable Wärmeabgabe ein variabler Dampfmassenstrom entnommen wird und der Dampfmassenstrom derjenige Massenstrom ist, der in dem Flüssigkeits-/Dampfkreislauf stromab der Entnahme des variablen Dampfmassenstroms verbleibt. Damit kann bei einem Dampfkraftwerk mit Kraft-Wärme-Kopplung bei einer Entnahme einer großen Menge an Dampf eine der Dampfturbinen von dem Strang entkuppelt werden.

Eine der beiden Strömungsmaschinen ist bevorzugt ein Verdichter und die andere der beiden Strömungsmaschinen ist eine Dampfturbine und das Verfahren weist bevorzugt die Schritte auf: Kuppeln beider Teilstränge mit dem Generator durch Einschalten des Innenmagnetfelds und des Außenmagnetfelds; Antreiben des Verdichters mit der Dampfturbine. Es ist bevorzugt, dass das Verfahren den Schritt aufweist: Erzeugen mit der Dampfturbine von mehr Leistung als der Verdichter verbraucht und Einspeisen der überschüssigen Leistung via eine Erregerwicklung des Stators in ein Stromnetz.

Bevorzugt weist das Verfahren den Schritt auf: Entkuppeln des mindestens einen Teilstrangs von dem Generator durch Ausschalten desjenigen Magnetfeldes, das zu dem mindestens einen Teilstrang gehört. Dies stellt vorteilhaft ein besonders einfaches und schnell durchführbares Verfahren dar, um einen Teilstrang von dem Generator zu entkuppeln. Es ist bevorzugt, dass der Stator eine Statorwicklung elektrischer Leiter aufweist und das Verfahren den Schritt aufweist: Elektrisches Anschließen der Statorwicklung an ein Stromnetz. Dadurch wird vorteilhaft erreicht, dass elektrische Leistung erzeugt und in ein Stromnetz eingespeist werden kann.

Es ist bevorzugt, dass mindestens einer der beiden Läufer ein Läufer einer Asynchronmaschine ist und das Verfahren die Schritte aufweist: Einschalten sowohl des Außenmagnetfeldes als auch des Innenmagnetfeldes; Rotieren beider Teilstränge mit einer unterschiedlichen Drehzahl.

Im Folgenden wird anhand der beigefügten schematischen Zeichnungen die Erfindung näher erläutert.

Es zeigen:
- Figur 1: einen Längsschnitt durch einen Turbomaschinenstrang,
- Figur 2: einen Längsschnitt durch einen weiteren Turbomaschinenstrang,
- Figur 3: einen Längsschnitt durch einen weiteren Turbomaschinenstrang,
- Figur 4: einen Querschnitt durch den Turbomaschinenstrang im Leerlauf,
- Figur 5: einen Querschnitt durch den Turbomaschinenstrang im Generatorbetrieb beider Läufer,
- Figur 6: einen Querschnitt durch den Turbomaschinenstrang im Generatorbetrieb beider Läufer,
- Figur 7: einen Querschnitt durch den Turbomaschinenstrang im Generatorbetrieb des Innenläufers und im Motorbetrieb des Außenläufers,
- Figur 8: einen Querschnitt durch eine Turbomaschinenstrang mit einem Innenläufer als Asynchronmaschine und
- Figur 9: einen Querschnitt durch eine Turbomaschinenstrang mit einem Innenläufer als Asynchronmaschine.

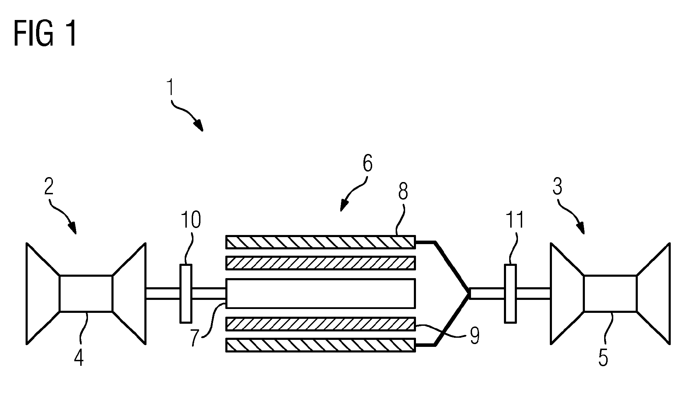

Wie es aus Figur 1 ersichtlich ist weist ein Turbomaschinenstrang 1 einen ersten Teilstrang 2, einen zweiten Teilstrang 3 und einen Generator 6 auf. Der erste Teilstrang 2 weist eine erste Strömungsmaschine 4 und einen Innenläufer 7 auf. Der zweite Teilstrang 3 weist eine zweite Strömungsmaschine 5 und einen Außenläufer 8 auf. Der Generator 6 weist einen Stator 9 auf. Der Innenläufer 7 ist radial innerhalb des Stators 9 angeordnet und der Außenläufer 8 ist radial außerhalb des Stators 9 angeordnet. Der Innenläufer 7 und der Außenläufer 8 sind an ihren axialen Stirnseiten im Wesentlichen fluchtend mit den axialen Stirnseiten des Stators 9 angeordnet. Der erste Teilstrang 2 erstreckt sich ausgehend von dem Generator 6 in die eine Axialrichtung des Turbomaschinenstrangs 1 und der zweite Teilstrang 3 erstreckt sich ausgehend von dem Generator 6 in die andere Axialrichtung des Turbomaschinenstrangs 1. Damit befindet sich die erste Strömungsmaschine 4 auf einer einen Axialseite des Generators 6 und die zweite Strömungsmaschine 5 auf der anderen Axialseite des Generators 6. Die beiden Teilstränge 2, 3 sind derart eingerichtet, dass sie unabhängig voneinander rotieren können.

Der erste Teilstrang 2 weist eine erste Verbindung 10 auf, die zwischen der ersten Strömungsmaschine 4 und dem Innenläufer 7 angeordnet ist. Der zweite Teilstrang 3 weist eine zweite Verbindung 11 auf, die zwischen der zweiten Strömungsmaschine 5 und dem Außenläufer 8 angeordnet ist. Mit der ersten Verbindung 10 ist die erste Strömungsmaschine 4 fest mit dem Innenläufer 7 verbunden, so dass die erste Strömungsmaschine 4 gemeinsam mit dem Innenläufer 7 rotiert. Mit der zweiten Verbindung 11 ist die zweite Strömungsmaschine 5 fest mit dem Außenläufer 8 verbunden, so dass die zweite Strömungsmaschine 5 gemeinsam mit dem Außenläufer 8 rotiert. Durch Lösen der ersten Verbindung 10 kann der erste Teilstrang 2 und durch Lösen der zweiten Verbindung 11 kann der zweite Teilstrang 3 auseinandergebaut werden.

Der Innenläufer 7 weist eine Innenerregerwicklung auf, die, wenn an ihr ein Strom angelegt wird, ein Innenmagnetfeld 19 erzeugt. Der Außenläufer 8 weist eine Außenerregerwicklung auf, die, wenn an ihr ein Strom angelegt wird, ein Außenmagnetfeld 20 erzeugt. Der Stator 9 weist eine Statorwicklung elektrischer Leiter auf, die an ein Stromnetz elektrisch angeschlossen ist und, wenn an ihr ein Strom angelegt wird, ein Netzmagnetfeld 21 erzeugt. Durch Einschalten des Innenmagnetfeldes 19 wird der erste Teilstrang 2 an den Stator 9 gekuppelt und durch Einschalten des Außenmagnetfeldes 21 wird der zweite Teilstrang an den Stator 9 gekuppelt.

Die beiden Strömungsmaschinen 4, 5 können beispielsweise Dampfturbinen eines Dampfkraftwerkes sein. Im dem Fall, dass das Dampfkraftwerk in Teillast betrieben wird, kann eine der beiden Dampfturbine von dem Generator 6 entkuppelt werden. In dem Fall, dass die Dampfturbine entkuppelt ist, kann auf ein Durchströmen der entkuppelten Dampfturbinen mit Dampf verzichtet werden. Zum Anfahren der entkuppelten und Dampfturbine kann der zu dieser Dampfturbine gehörige Läufer als Elektromotor betrieben werden, um das Anfahren zu unterstützen.

Alternativ kann es sich bei einer der beiden Strömungsmaschinen 4, 5 um eine Dampfturbine und bei der anderen der beiden Strömungsmaschinen 4, 5 um einen Verdichter handeln. Der Verdichter kann beispielsweise vorgesehen sein, ein Prozessgas zu verdichten. Mit dieser Anordnung ist es möglich den Verdichter von dem Generator 6 zu entkuppeln, gleichzeitig die Dampfturbine mit dem Generator zu kuppeln und die vollständige in der Dampfturbine umgesetzte Leistung via die Statorwicklung des Stators 9 in ein Stromnetz einzuspeisen. Ebenfalls ist es möglich sowohl den Verdichter als auch die Dampfturbine mit dem Generator 6 zu kuppeln und mit der Dampfturbine den Verdichter anzutreiben. In diesem Fall ist es möglich die gesamte in der Dampfturbine umgesetzte Leistung zum Antreiben des Verdichters zu verwenden. Auch ist es in diesem Fall möglich die in der Dampfturbine umgesetzte Leistung teilweise zum Antreiben des Verdichters zu verwenden und teilweise via die Statorwicklung des Stators 9 in das Stromnetz einzuspeisen.

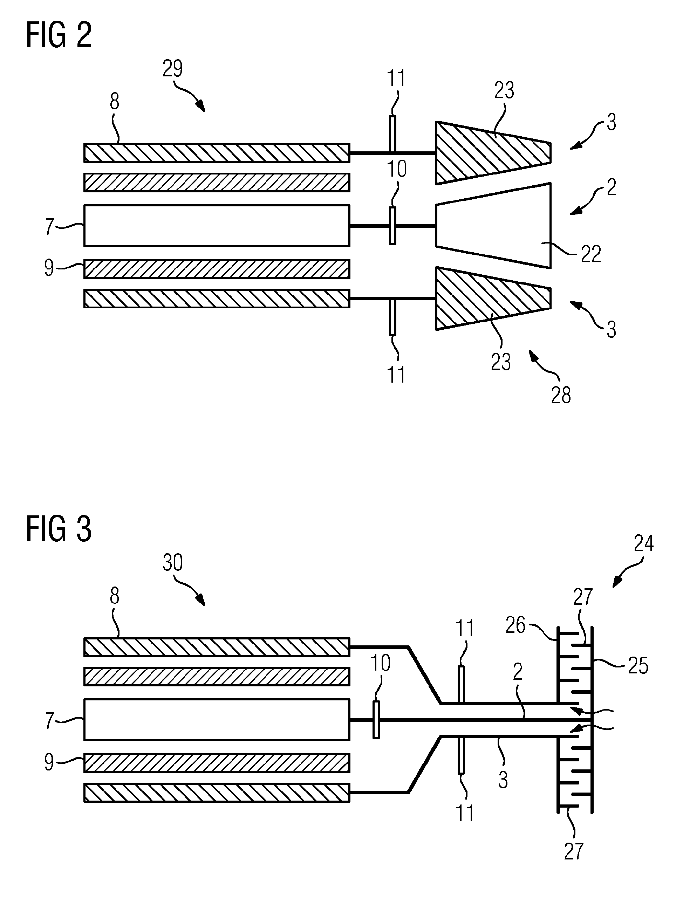

Der Turbomaschinenstrang 29 gemäß Figur 2 und der Turbomaschinenstrang 30 gemäß Figur 3 unterscheiden sich von dem Turbomaschinenstrang 1 gemäß Figur 1 dahingehend, dass die beiden Teilstränge 2, 3 sich nicht in unterschiedliche sondern in die gleiche Axialrichtung erstrecken. Der Turbomaschinenstrang 29 gemäß Figur 2 weist eine Doppelrotorenströmungsmaschine 28 auf, wobei der erste Teilstrang 2 einen Innenrotor 22 und der zweite Teilstrang 3 einen Außenrotor 23 der Doppelrotorenströmungsmaschine aufweist. Der Turbomaschinenstrang 30 gemäß Figur 3 weist eine Ljungström-Turbine 24 auf, welche eine erste Turbinenhälfte 25 und eine zweite Turbinenhälfte 26 aufweist. Der erste Teilstrang 2 weist die erste Turbinenhälfte 25 und der zweite Teilstrang 3 weist die zweite Turbinenhälfte 26 auf.

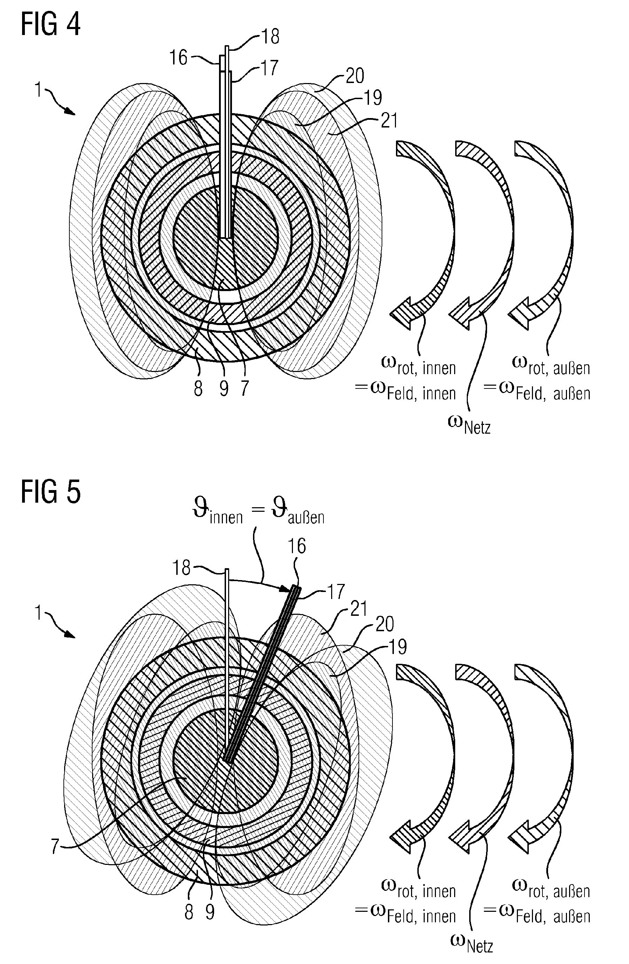

Figuren 4 bis 7 zeigen einen Querschnitt durch den Turbomaschinenstrang 1 im Bereich des Generators 6. In den Querschnitten sind der Innenläufer 7, der Stator 9 und der Außenläufer 8 dargestellt. Ebenfalls dargestellt sind das Innenmagnetfeld 19 mit dem Magnetfeldvektor 16 des Innenläufers 7, das Außenmagnetfeld 20 mit dem Magnetfeldvektor 17 des Außenläufers 8 und das Netzmagnetfeld 21 mit dem Magnetfeldvektor 18 eines Netzmagnetfeldes. Der Polradwinkel ϑᵢₙₙₑₙ ist der Winkel zwischen dem Magnetfeldvektor 16 des Innenläufers 7 und dem Magnetfeldvektor 18 des Netzmagnetfeldes 21. Der Polradwinkel ϑ_{außen} ist der Winkel zwischen dem Magnetfeldvektor 17 des Außenläufers 8 und dem Magnetfeldvektor 18 des Netzmagnetfeldes 21. Die Magnetfeldvektoren 16, 17, 18 sind in der Richtung von dem Südpol zu dem Nordpol gerichtet. Ebenfalls sind in Figuren 4 bis 7 dargestellt die Rotationskreisfrequenz ω_{rot,innen} des Innenläufer 7, die Rotationskreisfrequenz ω_{rot,außen} des Außenläufers 8 und Kreisfrequenz ω_{Netz} des Netzmagnetfeldes 21, wobei die Kreisfrequenzen jeweils durch einen Pfeil angedeutet sind. Die Kreisfrequenz ω_{Netz} gibt an, wie schnell sich das Netzmagnetfeld 21 dreht. Bei den Läufern 7, 8 der Figuren 4 bis 7 handelt es sich um die Läufer von Synchronmaschinen. Bei Synchronmaschinen steht das Magnetfeld 9, 20 des jeweiligen Läufers fest relativ zu dem jeweiligen Läufer, d.h. das Magnetfeld des jeweiligen Läufers dreht sich mit der gleichen Kreisfrequenz wie der Läufer.

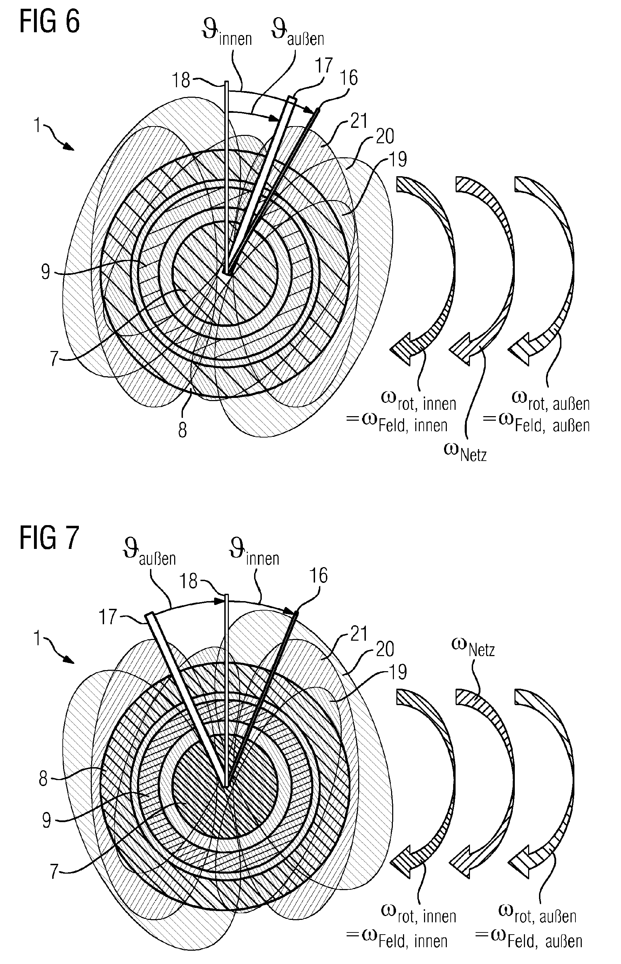

Figur 6 zeigt den Fall, dass beide Läufer 7, 8 im Leerlauf rotieren, bei dem ϑᵢₙₙₑₙ=ϑ_{außen}=0 ist. In dem Fall, dass einer der beiden der Läufer 7, 8 als Generator betrieben wird, läuft der Magnetfeldvektor 18 des Netzmagnetfeldes 21 dem jeweiligen Magnetfeldvektor 16, 17 nach. In dem Fall, dass einer beiden Läufer 7, 8 als Elektromotor betrieben wird, läuft der Magnetfeldvektor 18 des Netzmagnetfeldes 21 dem jeweiligen Magnetfeldvektor 16, 17 vor. Figuren 5 und 6 zeigen den Fall, das beide Läufer 7, 8 als Generator betrieben werden. In Figur 5 sind die beiden Polradwinkel ϑᵢₙₙₑₙ und ϑ_{außen} gleich: ϑᵢₙₙₑₙ=ϑ_{außen}≠0. In Figur 6 sind die beiden Polradwinkel ϑᵢₙₙₑₙ und ϑ_{außen} unterschiedlich: ϑᵢₙₙₑₙ≠0, ϑ_{außen}≠0, ϑᵢₙₙₑₙ≠ϑ_{außen}, wodurch ϑᵢₙₙₑₙ<0 und ϑ_{außen}>0 wären.

Figur 7 zeigt den Fall, dass der Innenläufer 7 als Generator und der Außenläufer 8 als Elektromotor betrieben werden:
ϑᵢₙₙₑₙ > 0, ϑ_{außen} < 0. In diesem Fall treibt der Innenläufer 7 den Außenläufer 8 an. Dies kann beispielsweise der Fall sein, wenn der Teilstrang 2 des Innenläufers 7 eine Dampfturbine und der Teilstrang 3 des Außenläufers 8 einen Verdichter aufweist. Es ist ebenso denkbar, den Verdichter in dem Teilstrang 3 des Außenläufers 8 und die Dampfturbine in dem Teilstrang 2 des Innenläufers vorzusehen.

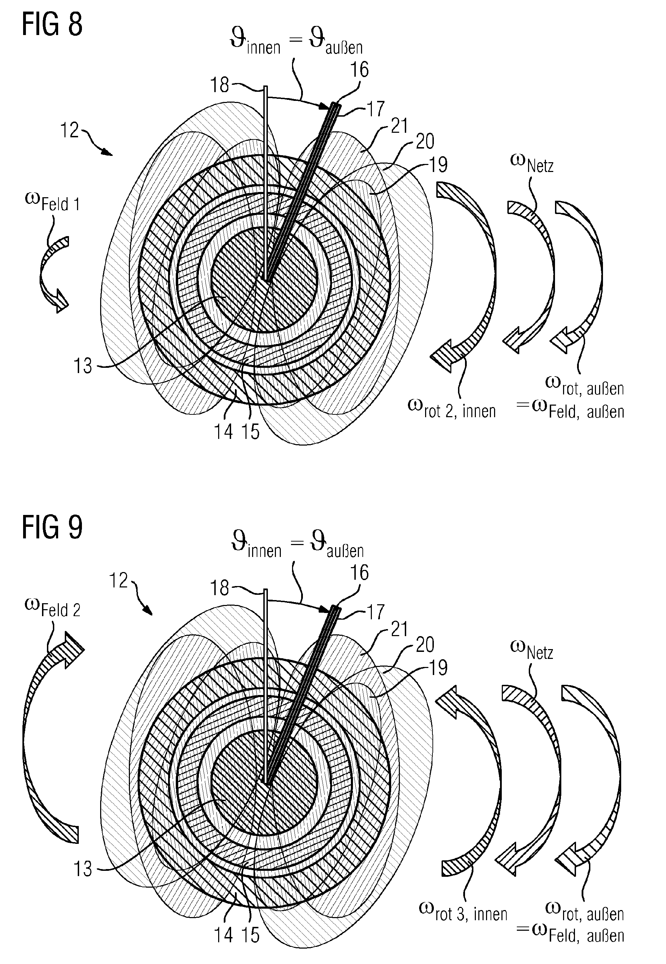

Figuren 8 und 9 zeigen einen Querschnitt durch einen Turbomaschinenstrang 12 im Bereich des Generators 6. In den Querschnitten sind der Innenläufer 13, der Stator 15 und der Außenläufer 14 dargestellt. Der Maschinenstrang 12 unterscheidet sich vom Maschinenstrang 1 dahingehend, dass der Innenläufer 13 der Läufer einer Asynchronmaschine ist. Der Außenläufer 14 ist der Läufer einer Synchronmaschine. Ebenfalls dargestellt sind das Innenmagnetfeld 19 mit dem Magnetfeldvektor 16 des Innenläufers 13, das Außenmagnetfeld 20 mit dem Magnetfeldvektor 17 des Außenläufers 14 und das Netzmagnetfeld 21 mit dem Magnetfeldvektor 18 eines Netzmagnetfeldes. Das Netzmagnetfeld ist das von dem Stator 15 erzeugte Magnetfeld. Der Polradwinkel ϑᵢₙₙₑₙ ist der Winkel zwischen dem Magnetfeldvektor 16 des Innenläufers 7 und dem Magnetfeldvektor 18 des Netzmagnetfeldes 21. Der Polradwinkel ϑ_{außen} ist der Winkel zwischen dem Magnetfeldvektor 17 des Außenläufers 14 und dem Magnetfeldvektor 18 des Netzmagnetfeldes 21. Die Magnetfeldvektoren 16, 17, 18 sind in der Richtung von dem Südpol zu dem Nordpol gerichtet.

Ebenfalls sind in Figuren 8 und 9 dargestellt die Rotationskreisfrequenz ω_{rot,außen} des Außenläufers 8 und die Rotationskreisfrequenz ω_{Netz} des Netzmagnetfeldes 21. In Figur 8 beträgt die Rotationskreisfrequenz des Innenläufer 13 ωᵣₒₜ₂, ᵢₙₙₑₙ. Das Innenmagnetfeld 19 des Innenläufers 13 rotiert mit einer Rotationskreisfrequenz ω_{Feld1} relativ zu dem Innenläufer 13. Der Innenläufer 13 rotiert in der gleichen Richtung wie der Außenläufer 14 und das Innenmagnetfeld rotiert in der entgegen gesetzter Richtung zu dem Außenläufer 14. Es gilt ω_{rot, außen}=ω_{Netz}= ω_{rot2, innen}+ ω_{Feld1}, wobei ω_{rot, außen}>0, ω_{Netz}>0, ω_{rot2, innen}>0 und ω_{Feld1}<0.

In Figur 9 beträgt die Rotationskreisfrequenz des Innenläufer 13 ω_{rot3, innen}. Das Innenmagnetfeld 19 des Innenläufers 13 rotiert mit einer Rotationskreisfrequenz ω_{Feld2} relativ zu dem Innenläufer 13. Der Innenläufer 13 rotiert in entgegengesetzter Richtung zu dem dem Außenläufer 14 und das Innenmagnetfeld rotiert in der gleichen Richtung wie der Außenläufer 14. ES gilt ω_{rot, außen}=ω_{Netz}= ω_{rot3, innen}+ω_{Feld2}, wobei ω_{rot, außen}>0, ω_{Netz}>0, ω_{rot3, innen}<0 und ω_{Feld2}>0.

Es ist ebenso denkbar, für den Außenläufer 14 oder für beide Läufer 13, 14 eine Asynchronmaschine vorzusehen. In jedem Fall müssen jedoch die Bedingungen ω_{rot,außen}+ω_{Feld,außen} = ω_{rot, innen}+ω_{Feld, innen}=ω_{Netz} erfüllt sein. Auch hier können die Polradwinkel ϑᵢₙₙₑₙ und ϑ_{außen} unterschiedlich oder gleich sein. Ebenfalls ist für beide Läufer sowohl der Betrieb als Generator als auch als Elektromotor möglich.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Turbomaschinenstrang mit einem einen Stator (9) aufweisenden Generator (6), einem ersten Teilstrang (2), der sich ausgehend von dem Generator (6) in die eine Axialrichtung des Turbomaschinenstrangs (1, 12, 29, 30) erstreckt und der eine erste Strömungsmaschine (4) sowie einen radial innerhalb des Stators (9) angeordneten Innenläufer (7) aufweist,
und einem zweiten Teilstrang (3), der sich ausgehend von dem Generator (6) in die andere Axialrichtung des Turbomaschinenstrangs (1, 12, 29, 30) erstreckt und eine zweite Strömungsmaschine (5) sowie einen radial außerhalb des Stators (9) angeordneten Außenläufer (8) aufweist,
wobei der Innenläufer (7) eine Innenerregerwicklung zum Erzeugen eines Innenmagnetfelds und der Außenläufer (8) eine Außenerregerwicklung zum Erzeugen eines Außenmagnetfelds aufweist, so dass durch Einschalten des jeweiligen Magnetfelds jeder der Teilstränge (2, 3) mit dem Stator (9) einzeln kuppelbar und durch Ausschalten des jeweiligen Magnetfelds jeder der Teilstränge (2, 3) von dem Stator (9) einzeln entkuppelbar ist.

2. Turbomaschinenstrang gemäß Anspruch 1,
wobei beide Strömungsmaschinen (4, 5) Dampfturbinen sind.

3. Turbomaschinenstrang gemäß Anspruch 1 oder 2,
wobei eine der beiden Strömungsmaschinen (4, 5) eine Dampfturbine und die andere der beiden Strömungsmaschinen (4, 5) ein Verdichter ist.

4. Turbomaschinenstrang mit einem einen Stator (9) aufweisenden Generator (6), einem ersten Teilstrang (2), der sich ausgehend von dem Generator (6) in die eine Axialrichtung des Turbomaschinenstrangs (1, 12, 29, 30) erstreckt und der einen ersten Strömungsmaschinenrotor sowie einen radial innerhalb des Stators (9) angeordneten Innenläufer (7) aufweist,
und einem zweiten Teilstrang (3), der sich ausgehend von dem Generator (6) in die eine Axialrichtung des Turbomaschinenstrangs (1, 12, 29, 30) erstreckt und einen zweiten Strömungsmaschinenrotor sowie einen radial außerhalb des Stators (9) angeordneten Außenläufer (8) aufweist,
wobei der Innenläufer (7) eine Innenerregerwicklung zum Erzeugen eines Innenmagnetfelds und der Außenläufer (8) eine Außenerregerwicklung zum Erzeugen eines Außenmagnetfelds aufweist, so dass durch Einschalten des jeweiligen Magnetfelds jeder der Teilstränge (2, 3) mit dem Stator (9) einzeln kuppelbar und durch Ausschalten des jeweiligen Magnetfelds jeder der Teilstränge (2, 3) von dem Stator (9) einzeln entkuppelbar ist.

5. Turbomaschinenstrang gemäß Anspruch 4,
wobei der erste Strömungsmaschinenrotor eine erste Turbinenhälfte (25) einer Ljungström-Turbine (24) und der zweite Strömungsmaschinenrotor die zweite Turbinenhälfte (26) der Ljungström-Turbine (24) ist oder
wobei der erste Strömungsmaschinenrotor ein Innenrotor (22) einer Doppelrotorenströmungsmaschine und der zweite Strömungsmaschinenrotor ein Außenrotor (23) der Doppelrotorenströmungsmaschine ist.

6. Turbomaschinenstrang gemäß einem der Ansprüche 1 bis 5, wobei der Stator (9) eine Statorwicklung elektrischer Leiter aufweist, die an ein Stromnetz elektrisch angeschlossen ist.

7. Turbomaschinenstrang gemäß einem der Ansprüche 1 bis 6, wobei mindestens einer der beiden Läufer ein Läufer einer Asynchronmaschine ist.

8. Verfahren zum Betreiben eines Turbomaschinenstrangs (1, 12, 29, 30) mit einem einen Stator (9) aufweisenden Generator (6), einem ersten Teilstrang (2), der sich ausgehend von dem Generator (6) in die eine Axialrichtung des Turbomaschinenstrangs (1, 12, 29, 30) erstreckt und der eine erste Strömungsmaschine (4) sowie einen radial innerhalb des Stators (9) angeordneten Innenläufer (7) aufweist, und einem zweiten Teilstrang (3), der sich ausgehend von dem Generator (6) in die andere Axialrichtung des Turbomaschinenstrangs (1, 12, 29, 30) erstreckt und eine zweite Strömungsmaschine (5) sowie einen radial außerhalb des Stators (9) angeordneten Außenläufer (8) aufweist,
wobei der Innenläufer (7) eine Innenerregerwicklung zum Erzeugen eines Innenmagnetfelds und der Außenläufer (8) eine Außenerregerwicklung zum Erzeugen eines Außenmagnetfelds aufweist, so dass durch Einschalten des jeweiligen Magnetfelds jeder der Teilstränge (2, 3) mit dem Stator (9) einzeln kuppelbar und durch Ausschalten des jeweiligen Magnetfelds jeder der Teilstränge (2, 3) von dem Stator (9) einzeln entkuppelbar ist, mit dem Schritt:
- Kuppeln von mindestens einem der beiden Teilstränge (2, 3) mit dem Stator (9) durch Einschalten desjenigen Magnetfeldes, das zu dem mindestens einen Teilstrang (7, 8) gehört.

9. Verfahren gemäß Anspruch 8,
wobei der Maschinenstrang (1, 12) Teil eines Dampfkraftwerks ist, das einen Flüssigkeits-/Dampfkreislauf aufweist, und die beiden Strömungsmaschinen (4, 5) Dampfturbinen sind, mit den Schritten:
- Durchströmen beider Dampfturbinen mit Dampf, wenn der Dampfmassenstrom in dem Flüssigkeits-/Dampfkreislauf über einem Schwellenwert liegt;
- Durchströmen lediglich einer der beiden Dampfturbinen mit Dampf, wenn der Dampfmassenstrom unter dem Schwellenwert liegt und Ausschalten desjenigen Magnetfeldes, das zu dem Teilstrang (2, 3) gehört, der die andere Dampfturbine aufweist.

10. Verfahren gemäß Anspruch 9,
wobei dem Flüssigkeits-/Dampfkreislauf für eine variable Wärmeabgabe ein variabler Dampfmassenstrom entnommen wird und der Dampfmassenstrom derjenige Massenstrom ist, der in dem Flüssigkeits-/Dampfkreislauf stromab der Entnahme des variablen Dampfmassenstroms verbleibt.

11. Verfahren gemäß Anspruch 8,
wobei eine der beiden Strömungsmaschinen (4, 5) ein Verdichter und die andere der beiden Strömungsmaschinen (4, 5) eine Dampfturbine ist, mit den Schritten:
- Kuppeln beider Teilstränge (2, 3) mit dem Generator (6) durch Einschalten des Innenmagnetfelds und des Außenmagnetfelds;
- Antreiben des Verdichters mit der Dampfturbine.

12. Verfahren gemäß Anspruch 11,
mit dem Schritt:
- Erzeugen mit der Dampfturbine von mehr Leistung als der Verdichter verbraucht und Einspeisen der überschüssigen Leistung via eine Erregerwicklung des Stators (9) in ein Stromnetz.

13. Verfahren zum Betreiben eines Turbomaschinenstrangs (1, 12, 29, 30) mit einem einen Stator (9) aufweisenden Generator (6), einem ersten Teilstrang (2), der sich ausgehend von dem Generator (6) in die eine Axialrichtung des Turbomaschinenstrangs (1, 12, 29, 30) erstreckt und der einen ersten Strömungsmaschinenrotor sowie einen radial innerhalb des Stators (9) angeordneten Innenläufer (7) aufweist, und einem zweiten Teilstrang (3), der sich ausgehend von dem Generator (6) in die andere Axialrichtung des Turbomaschinenstrangs (1, 12, 29, 30) erstreckt und einen zweiten Strömungsmaschinenrotor sowie einen radial außerhalb des Stators (9) angeordneten Außenläufer (8) aufweist,
wobei der Innenläufer (7) eine Innenerregerwicklung zum Erzeugen eines Innenmagnetfelds und der Außenläufer (8) eine Außenerregerwicklung zum Erzeugen eines Außenmagnetfelds aufweist, so dass durch Einschalten des jeweiligen Magnetfelds jeder der Teilstränge (2, 3) mit dem Stator (9) einzeln kuppelbar und durch Ausschalten des jeweiligen Magnetfelds jeder der Teilstränge (2, 3) von dem Stator (9) einzeln entkuppelbar ist, mit dem Schritt:
- Kuppeln von mindestens einem der beiden Teilstränge (2, 3) mit dem Stator (9) durch Einschalten desjenigen Magnetfeldes, das zu dem mindestens einen Teilstrang (7, 8) gehört.

14. Verfahren gemäß einem der Ansprüche 8 bis 13,
mit dem Schritt:
- Entkuppeln des mindestens einen Teilstrangs (2, 3) von dem Generator (6) durch Ausschalten desjenigen Magnetfeldes, das zu dem mindestens einen Teilstrang (2, 3) gehört.

15. Verfahren gemäß einem der Ansprüche 8 bis 14,
wobei der Stator (9) eine Statorwicklung elektrischer Leiter aufweist, mit dem Schritt:
- Elektrisches Anschließen der Statorwicklung an ein Stromnetz.

16. Verfahren gemäß einem der Ansprüche 8 bis 15,
wobei mindestens einer der beiden Läufer ein Läufer einer Asynchronmaschine ist, mit den Schritten:
- Einschalten sowohl des Außenmagnetfeldes als auch des Innenmagnetfeldes;
- Rotieren beider Teilstränge (2, 3) mit einer unterschiedlichen Drehzahl.
